# EUROPÄISCHE PATENTSCHRIFT

(11) **EP 3 347 301 B1**
(45) Veröffentlichungstag und Bekanntmachung des Hinweises auf die Patenterteilung: **11.10.2023**
(21) Anmeldenummer: 16766512.4
(22) Anmeldetag: 08.09.2016
(51) Int. Cl.: B67C 3/00, B64C 39/02

(54) **VORRICHTUNG UND VERFAHREN ZUM BEHANDELN VON BEHÄLTNISSEN UND VERPACKUNGEN MIT FLUGGERÄT ZUR ÜBERWACHUNG**
DEVICE AND METHOD FOR TREATING CONTAINERS WITH AIRCRAFT FOR SURVEILLANCE
DISPOSITIF ET PROCEDE POUR TRAITER DES RECIPIENTS AVEC ENGIN VOLANT POUR SURVEILLANCE

(30) Priorität: 09.09.2015 DE 102015115184
(43) Veröffentlichungstag der Anmeldung: 18.07.2018
(73) Patentinhaber: KRONES AG, 93073 Neutraubling (DE)
(72) Erfinder: KIRZINGER, Johannes, 93073 Neutraubling (DE)
(74) Vertreter: Hannke Bittner & Partner mbB Regensburg
(86) Internationale Anmeldenummer: PCT/EP2016/071140
(87) Internationale Veröffentlichungsnummer: WO 2017/042251

(56) Entgegenhaltungen:
- EP-A1- 2 711 158
- EP-A1- 2 813 914
- EP-A2- 2 284 120
- EP-A2- 2 818 958
- US-A1- 2014 034 776

## Beschreibung

Die vorliegende Erfindung bezieht sich auf eine Vorrichtung zum Behandeln von Behältnissen und/oder Verpackungsmaterial. Aus dem Stand der Technik sind unterschiedlichste Vorrichtungen zum Behandeln von Behältnissen oder Verpackungsmaterial bekannt. Üblicherweise sind derartige Anlagen sehr komplex und weisen eine Vielzahl von Anlagenteilen auf, wie beispielsweise Blasformmaschinen, Füller, Palettierer und dergleichen. Entsprechend aufwendig kann sich daher auch im Betrieb derartiger Anlagen eine Überwachung, insbesondere auch eine Fehlersuche derartiger Anlagen gestalten. Üblicherweise werden derartige Anlagen beispielsweise von einer zentralen Steuereinrichtung bedient und ein Benutzer kann von seinem Bedienort aus nicht alle auftretenden Fehler überblicken. Daneben kann es auch zu Störungen oder gar Unfällen kommen, weil Nutzer oder Personen sich in Bereichen aufhalten, welche für diese gefährlich sind.

EP 284 120 A2 offenbart eine Vorrichtung zum Behandeln von Behältnissen mit einer ersten und einer zweiten Behandlungseinrichtung, einer Transporteinrichtung zum Transportieren der Behältnisse und mit einer Überwachungseinrichtung zum Überwachen der Vorrichtung.

Ein unbemanntes und ferngesteuertes Fluggerät zur Überwachung einer technischen Anlage ist aus EP 2 813 914 A1 bekannt.

Der vorliegenden Erfindung liegt daher die Aufgabe zugrunde, derartigen Anlagen die Fehlersuche zu erleichtern. Daneben liegt der vorliegenden Erfindung die Aufgabe zugrunde, die Betriebssicherheit zu erhöhen. Daneben soll auch der Automatisierungsgrad insbesondere in Abfüll- und Verpackungsanlagen erhöht werden. Diese Aufgaben werden erfindungsgemäß durch die Gegenstände der unabhängigen Ansprüche gelöst. Vorteilhafte Ausführungsformen und Weiterbildungen sind Gegenstand der Unteransprüche.

Eine erfindungsgemäße Vorrichtung zum Behandeln und/oder zum Verarbeiten von Behältnissen und/oder Verpackungen weist eine erste Behandlungseinrichtung auf, welche die Behältnisse und/oder Verpackungen in einer ersten vorgegebenen Weise behandelt. Weiterhin weist die Vorrichtung eine zweite Behandlungseinrichtung auf, welche die Behältnisse und/oder Verpackungen in einer zweiten vorgegebenen Weise behandelt. Daneben ist auch eine Transporteinrichtung zum Transportieren der Behältnisse und/oder Verpackungen vorgesehen. Weiterhin weist die Vorrichtung eine Überwachungseinrichtung zum Überwachen der Vorrichtung und/oder eine Hilfseinrichtung zum Transportieren von Objekten auf.

Erfindungsgemäß weist die Überwachungseinrichtung und/oder Hilfseinrichtung ein unbemanntes und ferngesteuertes Fluggerät auf sowie eine Steuerungseinrichtung zum drahtlosen Steuern dieses Fluggeräts aufweist, wobei das Fluggerät bevorzugt eine Bildaufnahmeeinrichtung aufweist und wobei die Vorrichtung eine Begrenzungseinrichtung aufweist, welche einen Flugbereich des Fluggeräts begrenzt. Bei dem Fluggerät kann es sich insbesondere aber nicht ausschließlich um eine Drohne, einen Helikopter oder dergleichen handeln. Zusätzlich oder alternativ kann das Fluggerät auch eine Halte- und/oder Greifeinrichtung zum Halten und/oder Greifen von Objekten aufweisen.

Unter einem Behandlungsvorgang an einem Behältnis werden insbesondere Verarbeitungsvorgänge verstanden, wie ein Befüllen der Behältnisse, ein Etikettieren der Behältnisse, ein Sterilisieren der Behältnisse, ein Bedrucken der Behältnisse und dergleichen. Entsprechend ist wenigstens eine Behandlungseinrichtung aus einer Gruppe von Behandlungseinrichtungen ausgewählt, welche Öfen zum Erwärmen von Preformen, Vorrichtungen zum Umformen von Kunststoffvorformlingen zur Kunststoffbehältnissen, Sterilisationseinrichtungen zum Sterilisieren von Kunststoffvorformlingen oder Kunststoffflaschen, Füller, Etikettiermaschinen, Schrumpftunnel, Gebindegruppierungseinrichtungen, Dreh- und Verteilsysteme, Palettieranlagen, Sortieranlagen, Kombinationen hieraus und dergleichen enthält.

Unter einem Überwachen der Vorrichtung wird dabei insbesondere auch eine Fehlersuche bei evtl. auftretenden Fehlern verstanden, aber auch eine Überwachung im weiteren Sinne, etwa eine Überprüfung, ob sich Personen in einem für sie nicht zugänglichen und/oder gefährlichen Bereich befinden.

Vorteilhaft ist das Fluggerät elektrisch betrieben und weist besonders bevorzugt einen Akku auf. Bei einer weiteren vorteilhaften Ausführungsform kann das Fluggerät eine Trägerstruktur aufweisen, um an unterschiedlichen Oberflächen landen zu können. Dabei können weiterhin Sicherungsmittel vorgesehen sein, welche einen direkten Kontakt mit Antriebseinrichtungen des Fluggeräts, wie etwa Propellern (bzw. Rotoren) des Fluggeräts verhindern.

Bei einer bevorzugten Ausführungsform umfasst das Fluggerät mindestens eine Bildaufnahmeeinrichtung. Die mindestens eine Bildaufnahmeeinrichtung (insbesondere eine Kamera) des Fluggeräts ist bevorzugt bezüglich wenigstens einer Achse schwenkbar. Bevorzugt ist die Bildaufnahmeeinrichtung bezüglich wenigstens zweier Achsen schwenkbar bzw. drehbar ausgeführt. Auf diese Weise kann ein sehr weitreichendes Blickfeld der Bildaufnahmeeinrichtung erreicht werden.

Bei einer weiteren vorteilhaften Ausführungsform kann das Fluggerät auch Halte- oder Greifeinrichtungen aufweisen, um Objekte zu halten oder zu greifen. Bei diesen Objekten kann es sich beispielsweise um Werkzeuge oder Schraubelemente handeln. Daneben könnte das Fluggerät auch eine magnetische Halteeinrichtung aufweisen. Auf diese Weise kann das Fluggerät nicht nur zur Überwachung eingesetzt werden, sondern auch zum Transport etwa von Werkzeugen, beispielsweise wenn durch bzw. von einem Benutzer spezielle Werkzeuge zur Reparatur benötigt werden.

Es wird in diesem Zusammenhang darauf hingewiesen, dass auch anstelle der Bildaufnahmeeinrichtung lediglich eine Greif- oder Halteeinrichtung vorgesehen sein kann. Die Anmelderin behält sich vor, auch für eine derartige Ausführungsform Schutz zu beanspruchen. In diesem Fall handelt es sich bei dem Fluggerät nicht oder nicht nur um eine Überwachungseinrichtung sondern um eine Arbeitseinrichtung bzw. eine Hilfseinrichtung (welche insbesondere zum Transportieren von Objekten dient). Das Greifen oder Transportieren kann jedoch gleichwohl auch einer Überwachung der Anlage dienen. Eine derartige Greifeinrichtung könnte beispielsweise dazu dienen um Objekte wie Werkzeuge aber auch Behältnisse zu transportieren. Auch könnten etwa Arbeitsmittel durch das Fluggerät transportiert werden wie Klebstoffe oder Packstoffe oder dergleichen. Auch könnte das Fluggerät etwa ein Behältnis am Ausgang einer Behandlungseinrichtung, wie etwa eines Füllers aufnehmen und zu einem Labor zur Untersuchung transportieren. Weiterhin könnten anstelle oder zusätzlich zu der Bildaufnahmeeinrichtung auch Detektoren an dem Fluggerät vorhanden sein welche etwa das Auftreten bestimmter Substanzen erfassen können, etwa das Auftreten von giftigen Dämpfen, etwa bei Sterilisierungseinrichtungen. Die Anmelderin behält sich vor, für eine derartige Ausführungsform Schutz zu beanspruchen.

Bevorzugt ist dabei dieses Halte- oder Greifmittel auswechselbar, so dass das Fluggerät zum Halten und/oder Greifen und/oder Transportieren von unterschiedlichen Objekten eingerichtet werden kann.

Bevorzugt ist die Vorrichtung in einem wenigstens teilweise und bevorzugt vollständig geschlossenen Raum angeordnet, wie etwa in einer Maschinenhalle. In diesem Fall stellt sich das Problem dar, dass das Fluggerät auch ohne GPS-Signale navigieren können muss. Daher können anstelle oder zusätzlich zu einer GPS-Empfangseinheit andere Empfangseinheiten vorgesehen sein, welche insbesondere mit sogenannten Baken zusammenarbeiten, um eine Navigation des Fluggeräts zu ermöglichen. Bei derartigen Baken handelt es sich insbesondere um Sende und/oder Empfangseinheiten, die bevorzugt stationär angeordnet sind, und welche Signale ausgeben und/oder empfangen, welche zur Navigation und/oder Lokalisierung des Fluggeräts dienen.

Als Aktionsbereich des Fluggeräts wäre etwa eine Anlagenhalle denkbar. Denkbar sind jedoch auch mehrere (evtl. verbundene) Hallen, z.B. eine ganze Fabrik bzw. mehrere Anlagen in einer Halle.

Bei einer weiteren vorteilhaften Ausführungsform kann die Vorrichtung Haltemittel aufweisen, um das Fluggerät beispielsweise an einer Decke einer Maschinenhalle zu befestigen. Dabei kann es sich beispielsweise um magnetische Haltemittel handeln. Auf diese Weise ist es möglich, dass das Fluggerät sich in einem Ruhebetrieb in einer Position befindet, in der es beispielsweise Maschinenbediener und dergleichen nicht behindert. Auch ist es möglich, dass das Fluggerät in einem Arbeitsbetrieb zielgerichtet an eine Zielposition fliegen kann, ohne dabei Benutzer zu gefährden und ohne dabei mit anderen Maschinenteilen zu kollidieren.

Im Gegensatz zu sonstigen ferngesteuerten Fluggeräten ist der Bereich bzw. Raum, innerhalb dessen das Fluggerät zum Einsatz kommt, vorteilhaft begrenzt. Dies gilt bevorzugt sowohl für die Flughöhe als auch für die Erstreckungsrichtung in einer zu der vertikalen Richtung senkrecht stehenden Ebene. Die Begrenzungseinrichtung bewirkt insbesondere, dass der von dem Fluggerät erreichbare Bereich in alle Richtungen beschränkt ist, bzw. dass das Fluggerät nur in einem vorgegebenen begrenzten 3-dimensionalen Raum fliegen kann.

Bei einer weiteren vorteilhaften Ausführungsform weist die Begrenzungseinrichtung wenigstens eine erste Sendeeinrichtung auf, welche Signale an eine erste Empfangseinrichtung, welche an dem Fluggerät angeordnet ist, ausgibt. Bei dieser bevorzugten Ausführungsform weist daher das Fluggerät wenigstens eine Empfangseinrichtung zum Empfangen von Signalen und insbesondere elektromagnetischen (ggfs. auch optischen) Signalen auf. So kann es beispielsweise möglich sein, dass der Benutzer über eine Bildausgabeeinrichtung, wie etwa einen Monitor stets über die aktuelle Position des Fluggeräts informiert wird.

Bei einer weiteren vorteilhaften Ausführungsform weist das Fluggerät eine Sendeeinrichtung auf, um Signale und insbesondere Signale, welche für von der Bildaufnahmeeinrichtung aufgenommene Bilder charakteristisch sind, auszugeben. Insbesondere werden diese Signale dabei drahtlos ausgegeben. Mittels dieses Signals ist es möglich beispielsweise auf einem Wiedergabegerät diejenigen Bilder auszugeben, welche von der Bildaufnahmeeinrichtung aufgenommen wurden, beispielsweise Bilder eines defekten Elementes einer Behandlungseinrichtung. Dabei können die Bilder bzw. Videos bevorzugt in Echtzeit ausgegeben werden. Vorteilhaft ist die Bildaufnahmeeinrichtung zur Aufnahme von Bildern und/oder Videos geeignet. Auf diese Weise können auch Fehler erfasst werden, welche erst in einem Maschinenbetrieb erkennbar sind. Bei einer weiteren bevorzugten Ausführungsform ist es auch möglich, dass über die Steuerungseinrichtung eine Kameraposition geändert werden kann. So kann beispielsweise mittels der Steuereinrichtung ein Schwenken der Kamera oder auch des Fluggeräts erreicht werden.

Bei einer weiteren vorteilhaften Ausführungsform weist die Vorrichtung eine Bildausgabeeinrichtung zur Ausgabe von von der Bildaufnahmeeinrichtung aufgenommener Bilder auf. Auf diese Weise ist es insbesondere möglich, dass ein Benutzer in Echtzeit die von der Kamera aufgenommenen Bilder beobachten kann. So wäre es beispielsweise möglich, dass der Benutzer von einem entfernten Bediengerät Anweisungen an eine Maschine ausgibt und überprüfen kann, wie an einer anderen Stelle die Maschine hieraus reagiert. Auf diese Weise kann eine Fehlersuche erheblich erleichtert werden.

Erfindungsgemäß weist die Vorrichtung ein Ruheterminal auf, welches von dem Fluggerät zum Erreichen einer Ruheposition anfliegbar ist bzw. welches zur Erreichung einer Ruheposition von dem Fluggerät angeflogen werden kann. Dabei ist es möglich, dass die Steuerung oder ggfs. auch eine Steuerung des Fluggeräts selbst bewirkt, dass das Fluggerät beispielsweise bei Auftreten von Störungen stets zu diesem Ruheterminal zurückkehrt. Bei einer weiteren vorteilhaften Ausführungsform ist das Ruheterminal auch als Ladeeinrichtung zum elektrischen Laden des Fluggeräts bzw. des Akkus des Fluggeräts ausgebildet.

Dabei ist es insbesondere möglich, dass eine Ladeverbindung ohne manuellen Eingriff allein durch das Anfliegen des Terminals durch das Fluggerät aktiviert wird. So könnte beispielsweise das Fluggerät Kontaktstellen aufweisen, welche beim Anfliegen des Ruheterminals entsprechende Kontakteinrichtungen des Ruheterminals kontaktieren. Es wäre jedoch auch möglich, dass ein Aufladen des Fluggeräts induktiv erfolgt, sodass beispielsweise sowohl das Fluggerät als auch das Ruheterminal entsprechende Induktionsspulen aufweisen, um diese induktive Ladung zu ermöglichen.

Bei einer weiteren vorteilhaften Ausführungsform weist die Vorrichtung eine Kollisionsverhinderungseinrichtung auf, welche eine Kollision des Fluggeräts mit beweglichen oder unbeweglichen Objekten verhindert. Bei derartigen Vorrichtungen zum Behandeln von Behältnissen oder Verpackungen können sich in der Flugbahn des Fluggeräts zahlreiche Hindernisse befinden, beispielsweise Säulen von Maschinen und dergleichen. Es kann jedoch auch sein, dass es sich bei den Objekten um menschliche Objekte bzw. Personen handelt, mit denen ebenfalls eine Kollision (mit dem Fluggerät) verhindert werden soll. Im vorliegenden Fall ist zu berücksichtigen, dass anders als beim Einsatz anderer Drohnen der Benutzer die Drohne oft selbst nicht sieht, weil er beispielsweise an einer Steuerung arbeitet, jedoch die Drohne einen anderen Bereich der Maschine aufnimmt. In diesem Falle sollte das Fluggerät (auch als Drohne bezeichnet) selbst erkennen, falls sich in ihrer Flugbahn Hindernisse befinden. Dabei muss die Drohne insbesondere auch beweglichen Hindernissen ausweichen können. So kann beispielsweise eine Steuerung vorgesehen sein, welche bewirkt, dass das Fluggerät von einer vorgesehenen Flugbahn abweicht, um ein Hindernis zu umfliegen.

So wäre es beispielsweise möglich, dass das Fluggerät ein Radarsystem aufweist, welches Hindernisse in der Flugbahn des Fluggeräts erkennt. Es wäre jedoch auch möglich, dass die Bildaufnahmeeinrichtung bzw. Kamera selbst zum Erfassen von Hindernissen dient. So wäre es beispielsweise möglich, dass die Bildaufnahmeeinrichtung stets in Richtung der Flugbahn ausgerichtet ist, um so in der Flugbahn vor dem Fluggerät liegende Hindernisse zu erfassen.

Daneben können auch Infrarotsensoren vorgesehen sein, welche eine Annäherung des Fluggeräts, insbesondere an Menschen, erkennen.

Allgemein ist es möglich, dass das Fluggerät Personen innerhalb seines Flugbereichs erkennen kann. So kann etwa erkannt werden, falls sich Menschen in für sie gefährlichen Bereichen befinden. In diesem Falle kann diese Information von dem Fluggerät an die Steuerungseinrichtung ausgegeben werden und die Steuerungseinrichtung kann bestimmte Reaktionen auslösen. So könnte beispielsweise ein Alarm ausgelöst werden oder aber ein (Not-) Stopp der Anlage.

Erfindungsgemäß weist die Vorrichtung wenigstens eine Störungserkennungseinrichtung auf, welche dazu geeignet und bestimmt ist, Störungen der Behandlungseinrichtung zu erfassen. Vorteilhaft steuert die Steuerungseinrichtung das Fluggerät in Abhängigkeit von einer durch die Störungserkennungseinrichtung erfassten Störung. So kann beispielsweise die Störungseinrichtung einen Fehler in der ersten Behandlungseinrichtung feststellen und die Steuerungseinrichtung daraufhin an das Fluggerät die Anweisung auszugeben, den Bereich anzufliegen, in dem die Störung sehr wahrscheinlich aufgetreten ist. Auf diese Weise kann eine Aufnahme einer Störungsposition automatisiert erfolgen bzw. das Fluggerät automatisch den Bereich der Maschine bzw. Anlage anfliegen in dem eine Störung aufgetreten ist.

Diese Störungserkennungseinrichtung ist dazu geeignet und bestimmt, Störungen an die Steuerungseinrichtung des Fluggeräts zu melden bzw. kommunizieren. Bevorzugt weisen mehrere Behandlungseinrichtungen derartige Störungserkennungseinrichtungen auf und bevorzugt weisen alle Behandlungseinrichtungen derartige Störungserkennungseinrichtungen auf. Dabei kann es sich beispielsweise um Einrichtungen handeln, welche etwa ein Auslaufen von Flüssigkeiten erfassen oder ein Verklemmen von Kunststoffvorformlingen oder Flaschen während des Transports. Auch kann es sich hierbei um Inspektionseinrichtungen handeln, welche fehlerhafte Behältnisse erkennen. Auch kann es sich bei den Störungserkennungseinrichtungen um elektrische Messeinrichtungen handeln, welche etwa das Auftreten von für eine Störung charakteristischen Strömen erfassen. Daneben ist es auch möglich, dass zunächst Fehler erkannt werden, diese dann von dem Fluggerät inspiziert werden und anschließend durch den Benutzer (ggfs. Jedoch auch selbsttätig durch das Fluggerät) behoben werden

Bei einer weiteren vorteilhaften Ausführungsform handelt es sich bei wenigstens einer Behandlungseinrichtung um eine Fülleinrichtung, welche Behältnisse mit einer Flüssigkeit und insbesondere mit einem Getränk befüllt. Bei einer weiteren bevorzugten Ausführungsform handelt es sich bei wenigstens einer Behandlungseinrichtung um eine Blasformmaschine, welche Kunststoffvorformlinge zu Kunststoffbehältnissen umformt. Bei einer weiteren vorteilhaften Ausführungsform kann die Vorrichtung auch eine Transporteinrichtung aufweisen, welche Verpackungsmittel und insbesondere Behältnisse von der ersten Behandlungseinrichtung zu der zweiten Behandlungseinrichtung transportiert.

Es wäre jedoch auch denkbar, dass ein Maschinenbediener über die Steuerungseinrichtung eine Eingabe tätigt bzw. einen Zielort angibt. Dabei kann diese Eingabe eines Zielorts über eine Bilddarstellung der Anlage erfolgen, es wäre jedoch auch möglich, dass bei Auftreten eines bestimmten Fehlers an den Benutzer Vorschläge ausgegeben werden, wo sich der Fehler befindet und der Benutzer die Drohne an die ihm möglich erscheinenden Fehlerorte sendet, um so Bilder und/oder Videos aufzunehmen.

Bei einer weiteren vorteilhaften Ausführungsform wäre es auch möglich, dass der Benutzer zunächst grob einen Zielort für das Fluggerät vorgibt, dann aber noch die Möglichkeit hat, die Position des Fluggerätes an dem Zielort in bestimmten Grenzen zu ändern, beispielsweise um genauere Darstellungen der möglichen Fehlerursache zu erreichen.

Auch wäre es möglich, dass sich eine Bewegung der Bildaufnahmeeinrichtung gegenüber einem Träger des Fluggeräts steuern lässt. So könnte etwa eine Schwenkstellung der Bildaufnahmeeinrichtung gegenüber einem Träger gesteuert werden, beispielsweise eine Schwenkstellung bezüglich einer vertikalen oder horizontalen Achse. Auf diese Weise könnte der Benutzer auch ohne eine Bewegung des Fluggeräts den zu beobachtenden Bereich verändern. Auch wäre es möglich, dass weitere Parameter der Bildaufnahmeeinrichtung gesteuert werden können, wie etwa eine Bildauflösung oder ein optischer Zoom.

Bei einer weiteren vorteilhaften Ausführungsform könnte die Vorrichtungen Beobachtungspositionen aufweisen, welche von dem Fluggerät angeflogen werden können. Im Betrieb wäre es möglich, dass das Fluggerät eine derartige Position, welche etwa einen Träger für das Fluggerät aufweist, anfliegt und dort zur Ruhe kommt und die Bildaufnahmeeinrichtung ausgehend von dieser Ruheposition Bilder aufnimmt. Auf diese Weise könnten im Bedarfsfalle sehr ruhige Bilder von möglichen Störungsquellen aufgenommen werden.

Bei einer weiteren vorteilhaften Ausführungsform weist das Fluggerät eine Beleuchtungseinrichtung auf. Vorteilhaft weist das Fluggerät eine Beleuchtungseinrichtung auf, welche dazu geeignet und bestimmt ist, den von der Bildaufnahmeeinrichtung beobachteten Ort zu beleuchten. Dies kann insbesondere sinnvoll sein, wenn eine Bildaufnahme an dunkeln Stellen einer Maschine nötig ist.

Dabei wäre es auch möglich, dass beispielsweise eine derartige Beleuchtungseinrichtung mit der Bildaufnahmeeinrichtung gekoppelt ist, sodass bei Bedarf immer ein möglicher Zielort von der Beleuchtungseinrichtung beleuchtet werden kann.

Bei einer weiteren vorteilhaften Ausführungsform weist das Fluggerät eine Ladestandserfassungseinrichtung auf, welche einen Ladezustand eines Akkus des Fluggeräts erfasst. So ist es möglich, dass eine derartige Erfassungseinrichtung erkennt, wenn die Ladekapazität eines Akkus des Fluggeräts zur Neige geht. In diesem Fall kann das Fluggerät selbst an seinen Zielort bzw. an die Ladestation zurückkehren. Bei einer weiteren vorteilhaften Ausführungsform wäre es denkbar, dass eine Steuereinrichtung die Flugbahn des Fluggeräts derart steuert, dass dieses ausgehend von seiner Ruheposition in vertikaler Richtung aufsteigt, anschließend in größerer Höhe zu einem Zielort gelangt und hier wieder senkrecht nach unten fliegt, sofern sich in dieser unmittelbaren vertikalen Bahn keine Hindernisse befinden.

Bei einer weiteren vorteilhaften Ausführungsform weist die Vorrichtung einen Reinraum auf, innerhalb dessen die Behältnisse bzw. das Verpackungsmaterial transportiert werden. So können beispielsweise die Behältnisse innerhalb eines solchen Reinraums befüllt werden oder aber innerhalb eines Reinraums können Kunststoffvorformlinge zu Kunststoffbehältnissen umgeformt werden. Auch etwa eine Sterilisation von Behältnissen könnte innerhalb eines solchen Reinraums stattfinden. Vorteilhaft ist das Fluggerät dazu geeignet und bestimmt, innerhalb eines derartigen Reinraums zu fliegen. Dies kann vorteilhaft sein, da dann zu Inspektionszwecken der Reinraum nicht geöffnet werden muss. Auch ist es denkbar, dass das Fluggerät innerhalb des Reinraums Bereiche anfliegen kann, welche für Menschen gefährlich wären. Dabei ist es möglich, dass innerhalb des Reinraums Ruhepositionen vorgesehen sind, welche das Fluggerät anfliegen kann oder auch bestimmte Positionen, an denen das Fluggerät andocken kann, um so stationäre Inspektionen mit der Bildaufnahmeeinrichtung durchführbar zu machen.

Bei einer weiteren vorteilhaften Ausführungsform ist auch ein Umschalten auf einen manuellen Betriebsmodus möglich. Falls beispielsweise das Fluggerät bzw. die Drohne die Fehlerquelle nicht erkennt, kann der Benutzer deren Steuerung übernehmen um die Anlage zu inspizieren.

Daneben ist es möglich, dass das Fluggerät in das Anlagenkonzept integriert ist und bevorzugt über eine Steuerung die Anweisung bekommen kann, bei einer Fehlermeldung orientiert die Maschine anzufliegen, den Fehler ausfindig zu machen, gegebenenfalls den Fehler zu beseitigen oder einen Anlagenbetreiber zu informieren.

Daneben kann das hier beschriebene Fluggerät auch bei einem Produktwechsel oder Formatteilwechsel zum Einsatz kommen. So ist es beispielsweise möglich, dass das Fluggerät mit bereits in die Anlage integrierten Robotern oder FTS (fahrerlosen Transportsystemen) zusammenwirkt und/oder Informationen mit diesen austauscht. Daneben wäre es denkbar, dass das Fluggerät einen Formatteilwechsel selbstständig durchführt.

Die vorliegende Erfindung ist weiterhin auf ein Verfahren zum Betreiben einer Vorrichtung zum Behandeln von Behältnissen und/oder Verpackungen gerichtet, wobei die Behältnisse und/oder Verpackungen mit einer ersten Behandlungseinrichtung in einer ersten vorgegebenen Weise behandelt werden und von einer zweiten Behandlungseinrichtung in einer zweiten vorgegebenen Weise behandelt werden und weiterhin mittels einer Transporteinrichtung transportiert werden. Dabei kann es sich beispielsweise um einen Transport der Behältnisse von der ersten Behandlungseinrichtung zu der zweiten Behandlungseinrichtung handeln. Allerdings werden die Behältnisse auch bevorzugt während ihrer Behandlung zumindest zeitweise transportiert. Dies bedeutet, dass die Behandlungseinrichtungen selbst bevorzugt auch Transporteinrichtungen zum Transportieren der Behältnisse aufweisen.

Weiterhin erfolgt wenigstens zeitweise eine Überwachung der Vorrichtung mittels einer Überwachungseinrichtung. Erfindungsgemäß fliegt im Rahmen der Überwachung mit der Überwachungseinrichtung ein unbemanntes und ferngesteuertes Fluggerät, welches eine Bildaufnahmeeinrichtung aufweist, vorgegebene Bereiche der Vorrichtung an und nimmt wenigstens ein Bild wenigstens eines Bereichs und bevorzugt mehrerer dieser vorgegebenen Bereiche auf.

Es wird daher auch verfahrensseitig vorgeschlagen, dass die Überwachung der Vorrichtung mittels eines unbemannten Fluggeräts durchgeführt wird. Unter einer Überwachung wird dabei sowohl eine Überwachung in einem laufenden bzw. ordnungsgemäßen Betrieb verstanden, als auch insbesondere einem Überwachen beim Auftreten von Fehlern. Auch kann es sich bei der Überwachung um ein routinemäßiges Überwachen eines ordnungsgemäßen Arbeitsbetriebs handeln. Auch kann es sich um ein Feststellen von Personen und/oder Fremdkörpern in bestimmten Bereichen der Anlage handeln.

Das Fluggerät fliegt wenigstens zeitweise Bereiche der Vorrichtung an, in denen Fehler auftreten. Auf diese Weise ist es einem Benutzer möglich, Fehler in Bereichen der Anlagen zu erkennen ohne dass er diese selbst unmittelbar sieht. Vorteilhaft kann es sich bei den Bildern um mehrere Bilder oder auch um Videos handeln. Bevorzugt können zu diesem Zweck mittels einer Störungserkennungseinrichtungen Störungen der Vorrichtung erkannt werden und das Fluggerät kann in Abhängigkeit von solchen erkannten Störungen gesteuert werden, etwa angewiesen werden, die Bereiche dieser Störungen anzufliegen.

Bei einem weiteren bevorzugten Verfahren übermittelt das Fluggerät bzw. die Bildaufnahmeeinrichtung Daten, die für die aufgenommenen Bilder und/oder Videos charakteristisch sind. Dabei werden bei einem weiteren bevorzugten Verfahren die von der Bildaufnahmeeinrichtung aufgenommenen Bilder an einen Benutzer ausgegeben.

Bei einem weiteren bevorzugten Verfahren fliegt das Fluggerät diese vorgegebenen Bereiche mittels vorbestimmter Flugbahnen an. Dies bedeutet, dass das Fluggerät nicht durch den Benutzer gesteuert wird, sondern beispielswiese auf Basis eines Programms bestimmte Bereiche der Maschine angeflogen werden können. So wäre es beispielsweise möglich, dass im Störungsfall der Ort identifiziert wird, an dem die Störung aufgetreten ist, und das Fluggerät automatisch diesen Ort anfliegt. Es wäre jedoch auch möglich, dass das Fluggerät durch den Benutzer gesteuert wird. Bevorzugt transportiert das Fluggerät wenigstens zweitweise mittels einer Halte- und/oder Greifeinrichtung Objekte. Bei diesen Objekten kann es sich etwa um Werkzeuge handeln aber auch um Materialien wie Klebstoff und dergleichen, wie oben erwähnt.

Erfindungsgemäß wird ein Aktionsbereich des Fluggeräts begrenzt. Dies bedeutet, dass das Fluggerät gewisse vorbestimmte Bereiche und insbesondere vorbestimmte Bereiche der Vorrichtung nicht verlassen kann. Wie oben erwähnt, befinden sich derartige Vorrichtungen üblicherweise in geschlossenen Räumen, sodass der Aktionsbereich des Fluggeräts bereits durch die Wände dieser Räume begrenzt wäre. Bevorzugt werden jedoch demgegenüber engere Begrenzungen vorgesehen, sodass auch bereits im Vorfeld Kollisionen mit Wänden oder dergleichen verhindert werden können.

Bei einem weiteren bevorzugten Verfahren fliegen die Fluggeräte den Zielbereich nicht auf dem kürzesten Weg an. Der Grund hierfür liegt darin, dass der kürzeste Weg möglicherweise Hindernisse enthalten kann. Damit wäre es möglich, dass im Rahmen der Flugbahn zunächst das Fluggerät in vertikaler Richtung abhebt, bis es in einen Höhenbereich gelangt, in dem keine Hindernisse mehr vorliegen, innerhalb dieses Bereichs einen Zielbereich anfliegt und dort wieder absinkt.

Auch wäre es möglich, dass für die Flugbahnen des Fluggeräts vorgegebene Kanäle bzw. Flugpfade geschaffen werden, die jeweils angeflogen werden. Auf diese Weise ist auch bei Umbauten bei der jeweiligen Vorrichtung lediglich darauf zu achten, dass in diesen Flugbahnen bzw. Flugsektoren keine Hindernisse aufgebaut werden.

Bevorzugt ist jedoch das Fluggerät in der Lage, gleichwohl vorhandenen Hindernissen (ggfs. auch Menschen) auszuweichen.

Bei einem weiteren vorteilhaften Verfahren fliegt das Fluggerät wenigstens zeitweise ein Ruhe- bzw. Ladeterminal an, um dort geladen zu werden.

Vorteilhaft wird die Flugroute des Fluggeräts mittels einer Vielzahl von Sendeeinrichtungen bestimmt bzw. beeinflusst. In diesem Falle kann eine Vielzahl von Baken vorgesehen sein, anhand derer das Fluggerät seine Position bestimmt und ggfs. korrigiert. So können, wie oben erwähnt, zur Navigation sogenannte Funkbaken eingesetzt werden, die in der Funknavigation zur Orientierung dienen. Diese Baken weisen dabei üblicherweise genau bekannte Positionen auf. Derartige Funkbaken sind auch unter der Bezeichnung Radio Beacon (RBN) bekannt. Um so den eigenen Standort des Fluggeräts zu bestimmen, wäre es möglich, dass sich die einzelnen Baken an den Zielorten befinden. Es wäre jedoch auch möglich, dass sich die Baken an anderen Orten befinden, und die tatsächliche Position des Fluggeräts durch Verfahren, wie etwa eine Kreuzpeilung bestimmt wird.

Vorteilhaft handelt es sich bei dem Verfahren zum Behandeln der Behältnisse um ein Verfahren, welches aus einer Gruppe von Verfahren ausgewählt ist, welche Etikettierverfahren, Füllverfahren, Blasformverfahren, Palettierverfahren und dergleichen enthält. Vorteilhaft handelt es sich bei den zu behandelnden Behältnissen um Kunststoffbehältnisse.

Vorteilhaft werden an den Behältnissen und/oder Verpackungsmitteln mehrere Verfahrensschritte durchgeführt wie etwa Füllvorgänge, Umformungsvorgänge, insbesondere Blasformvorgänge, Etikettiervorgänge, Druckvorgänge, Sterilisationsvorgänge, Verschließvorgänge und dergleichen.

Weitere Vorteile und Ausführungsformen ergeben sich aus der beigefügten Zeichnung. Dabei zeigt:

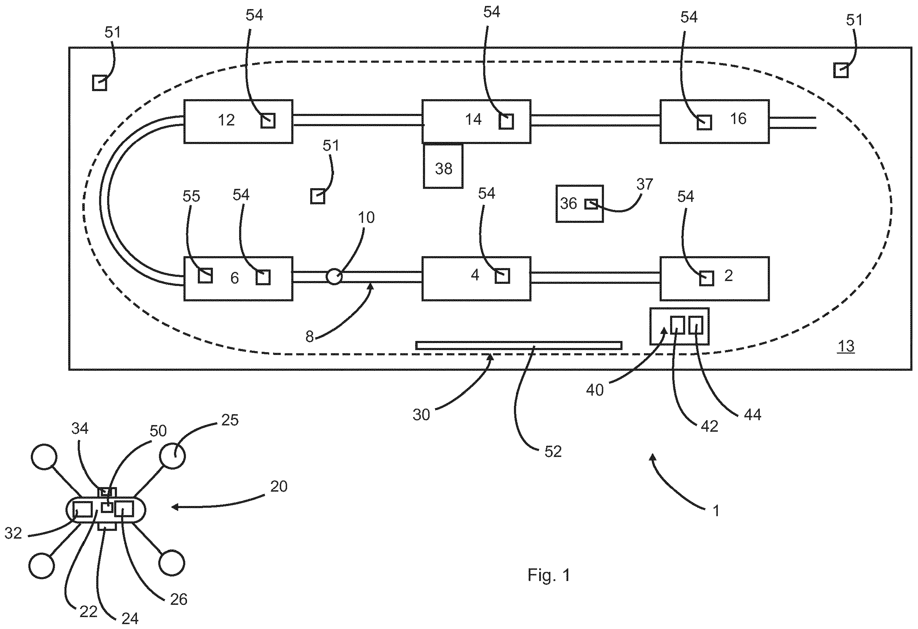

- Fig. 1: eine schematische Darstellung einer erfindungsgemäßen Vorrichtung zum Behandeln von Behältnissen.

Figur 1 zeigt eine schematische Darstellung einer erfindungsgemäßen Vorrichtung 1 zum Behandeln von Behältnissen 10. Bei dieser exemplarisch dargestellten Anordnung ist eine Vielzahl von Behandlungseinheiten 2, 4, 6, 12, 14, 16 vorgesehen, welche Behältnisse 10 in vorgegebener Weise behandeln. Dabei kann es sich beispielsweise bei der Behandlungseinheit 2 um eine Erwärmungseinheit bzw. um einen Ofen zum Erwärmen von Kunststoffvorformlingen handeln. Bei der Behandlungseinheit 4 kann es sich beispielsweise um eine Umformungseinrichtung zum Umformen von Kunststoffvorformlingen zu Kunststoffbehältnissen handeln. Das Bezugszeichen 6 kann sich beispielsweise auf eine Sterilisationseinheit zum Sterilisieren von Behältnissen beziehen, das Bezugszeichen 12 auf eine Fülleinrichtung zum Befüllen von Behältnissen, das Bezugszeichen 14 auf einen Verschließer und das Bezugszeichen 16 auf eine Einheit, welche mehrere Behältnisse zu Gebinden zusammenstellt. Zwischen diesen einzelnen Behandlungseinheiten sind jeweils Transporteinrichtungen 8 vorgesehen. Diese sind in Fig. 1 nur grob schematisch dargestellt. In der Praxis kann es sich hier insbesondere um Transportsterne handeln, welche die Behältnisse von einer Behandlungseinheit zur nächsten Behandlungseinheit transportieren. Gegebenenfalls kann es sich hier auch um sogenannte Teilungsverzugssterne handeln, welche eine Teilung zwischen einzelnen Behältnissen verändern, beispielsweise vergrößern.

Jede dieser Behandlungseinheiten weist bevorzugt hier eine Sendeeinrichtung 55, eine sogenannte Bake auf, welche dazu dient, dass sich ein ferngesteuertes Fluggerät an dieser orientieren kann.

Bevorzugt weist die Vorrichtung jedoch mindestens drei solche Sendeeinrichtungen auf. Das Bezugszeichen 13 bezieht sich auf einen Raum, in dem die Vorrichtung angeordnet ist, etwa einen Maschinenraum. Innerhalb dieses Raums ist auch eine Begrenzungseinrichtung 30 vorgesehen, in Form einer Vielzahl von elektrischen Leitern, die in unterschiedlichen Höhenpositionen angeordnet sind. Diese Begrenzungseinrichtung 30 bewirkt, dass das Fluggerät 20 den von dieser Begrenzungseinrichtung umschlossenen Bereich nicht verlassen kann. Auf diese Weise können beispielsweise Kollisionen mit Raumbegrenzungswandungen vermieden werden.

Die Begrenzungseinrichtung weist damit bevorzugt sowohl die genannten Sendeeinrichtungen als auch die Empfangseinrichtung des Fluggeräts 20 auf. Es wäre jedoch auch eine GPS - Peilung denkbar, durch welche der Flugbereich des Fluggeräts begrenzt wird. Auch können durch die Begrenzungseinrichtung 30 Positionen bzw. Flugbereiche, insbesondere Flugkorridore welche das Fluggerät passieren kann, vorgegeben werden.

Das Fluggerät 20 weist hier vier Propellerantriebe 25 auf und einen Träger 22, an dem eine Bildaufnahmeeinrichtung 24 angeordnet ist. Dabei ist diese Bildaufnahmeeinrichtung 24 hier schwenkbar an dem Träger 22 angeordnet, so dass sie sich beispielsweise bezüglich des Trägers 22 um ein senkrecht zur Figurenebene stehende Achse drehen kann und auch beispielsweise in einer Ebene, die hier senkrecht zur Figurenebene steht, geschwenkt werden kann. Auf diese Weise ist es möglich, dass die Bildaufnahmeeinrichtung 24 vollumfänglich Bilder erfassen kann. Auch wäre es bei entsprechender Auslegung möglich, dass die Bildaufnahmeeinrichtung Bilder oberhalb der einzelnen Rotoren 25 aufnehmen kann. Auf diese Weise kann das Fluggerät 20 beispielsweise in einem Bereich unterhalb einer Fehlerstelle fliegen, und die Bildaufnahmeeinrichtung 24 könnte nach oben blicken.

Das Bezugszeichen 34 kennzeichnet eine Beleuchtungseinrichtung, die hier an der Bildaufnahmeeinrichtung angeordnet ist. Diese Beleuchtungseinrichtung könnte beispielsweise im Bedarfsfalle dunklere Stellen beleuchten, sodass diese in günstiger Weise von der Bildaufnahmeeinrichtung 24 aufgenommen werden können.

Das Bezugszeichen 26 kennzeichnet eine Empfangseinrichtung, welche zum Empfangen von Funksignalen geeignet und bestimmt ist, welche von den einzelnen Sendeeinrichtungen 51, 52 und 55 ausgegeben werden. Das Bezugszeichen 32 wiederum kennzeichnet eine Sendeeinrichtung welche Daten, insbesondere Daten für von der Bildaufnahmeeinrichtung 34 gemachte Aufnahmen senden kann. Daneben kann das Fluggerät 20 auch noch eine weitere Steuerungseinrichtung 50 zum Steuern des Flugmodus aufweisen. Diese weitere Steuerungseinrichtung 50 kann beispielsweise einen automatischen Flug des Fluggeräts an bestimmte Zielkoordinaten ermöglichen.

Das Bezugszeichen 40 kennzeichnet eine solche (stationäre) Steuereinrichtung zum Steuern des Fluggeräts. Dabei kann beispielsweise die Steuereinrichtung das Fluggerät so steuern, dass es in dem und/oder in den Bereich einer Behandlungseinheit 2, 4, 6, 12, 14, 16 fliegt. Die Steuerung des Fluggeräts 20 kann dabei durch den Benutzer selbst erfolgen, es wäre jedoch auch eine automatische Steuerung des Fluggeräts möglich, etwa auf eine Anweisung hin, einen Bereich anzufliegen, in dem ein Fehler aufgetreten ist.

Das Bezugszeichen 42 kennzeichnet eine Eingabeeinrichtung, über die beispielsweise der Benutzer Anweisungen an das Fluggerät geben kann. Das Bezugszeichen 44 kennzeichnet eine Bildwiedergabeeinrichtung, wie etwa einen Bildschirm, über den von der Bildaufnahmeeinrichtung 24 des Fluggeräts 20 aufgenommene Bilder und/oder Videosequenzen an den Benutzer ausgegeben werden können. Dieser kann damit aus der Ferne eine Inspektion der Anlage vornehmen. Auch die Steuerungseinrichtung 40 und oder die Bildwiedergabeeinrichtung 44 können dabei mobil ausgebildet sein. Dabei könnte es sich z.B. um Smartphones handeln, welche die von der Bildaufnahmeeinrichtung aufgenommenen Bilder ausgeben können.

Das Bezugszeichen 54 kennzeichnet Störungserkennungseinrichtungen, welche zum Erkennen von bei den einzelnen Behandlungseinrichtungen 2, 4, 6, 12, 14, 16 auftretenden Fehlern dient. Diese Störungserkennungseinrichtung können auftretende Fehler an die Steuereinrichtung 40 melden. Auf diese Weise können dann entsprechende Fehlerort gezielt angeflogen werden.

Weiterhin wäre es auch möglich, dass innerhalb eines Gehäuses ein Reinraum ausgebildet wird, innerhalb dessen die Behältnisse transportiert werden. Dabei könnte dieser Reinraum die hier gezeigten Behandlungseinrichtungen umgeben, es wäre jedoch auch möglich, dass ein Reinraum kleiner gestaltet ist und nur eine Maschine, beispielsweise eine Blasformmaschine oder auch einen Transportpfad der Behältnisse umgibt. In diesem Falle wäre es denkbar, dass das Fluggerät 20 innerhalb eines derartigen Reinraums fliegt. Diese Ausgestaltung bietet den Vorteil, dass ein Reinraum zu Inspektionszwecken nicht geöffnet werden muss. Auch kann bei manchen Anwendungen beispielsweise bei Sterilisationseinrichtungen verhindert werden, dass Benutzer mit gefährlichen Medien in Kontakt kommen.

Das Bezugszeichen 36 kennzeichnet ein Ruheterminal, an welches das (stark vergrößert dargestellte) Fluggerät 20 nach einem Einsatz zurückkehren kann. Dieses Ruheterminal kann dabei auch Ladeelemente 37 aufweisen, welche zum Laden des Fluggeräts 20 dienen.

Das Bezugszeichen 38 kennzeichnet ein weiteres Ruheterminal, welches jedoch hier von einer Behandlungseinrichtung 14 angeordnet ist. Im Bedarfsfall können auch Ruheterminals vorgesehen sein, an denen das Fluggerät andockt bzw. landet, insbesondere falls an diesen Stellen mit einem stationären Fluggerät Bildaufnahmen gemacht werden sollen.

Das Bezugszeichen 51 kennzeichnet eine (insbesondere stationäre) Sendeeinrichtung, die insbesondere zur Positionssteuerung des Fluggeräts 20 dient. Anhand von dieser Sendeeinrichtung (die insbesondere als Bake ausgeführt ist) kann sich das Fluggerät 20 orientieren. Das Bezugszeichen 52 kennzeichnet eine Sendeeinrichtung, welche jedoch langgestreckt ist. Anhand dieser einzelnen Sendeeinrichtungen kann sich, wie gesagt, das Fluggerät 20 sehr genau orientieren und so gewünschte Flugpositionen anfliegen. Weiterhin könnte das Fluggerät 20 auch eine Entfernungsmesseinrichtung (nicht gezeigt) aufweisen, welche beispielsweise eine Entfernung zu einer Decke eines Raums, in dem sich die Vorrichtung 1 befindet, ermöglicht. Auf diese Weise kann eine Höhenposition eines Fluggerätes sehr genau bestimmt werden. Wie oben erwähnt, kann auch diese Höhenbestimmung dazu dienen, dass eine Navigation des Fluggeräts erreicht wird. So könnten in einer bestimmten Höhe einer Vorrichtung Flugkorridore eingerichtet werden, in denen sich keine Hindernisse befinden. Diese Flugkorridore können genutzt werden, um das Fluggerät schnell an gewünschte Positionen fliegen zu lassen.

### Bezugszeichenliste

- 1: Vorrichtung
- 2, 4, 6, 12, 14, 16: Behandlungseinrichtungen
- 8: Transporteinrichtung
- 10: Behältnisse
- 13: Raum
- 20: Fluggerät
- 22: Propeller
- 24: Bildaufnahmeeinrichtung
- 25: Rotoren
- 26: Sendeeinrichtung (zur Bildübertragung)
- 30: Begrenzungseinrichtung
- 32: Sendeeinrichtung
- 34: Beleuchtungseinrichtung
- 36: Ruheterminal
- 37: Ladeelemente
- 40: Steuereinrichtung
- 42: Eingabeeinrichtung
- 44: Bildwiedergabeeinrichtung
- 50: weitere Steuerungseinrichtung
- 54: Störungserkennungseinrichtung
- 51, 52, 55: Sendeeinrichtungen

## Patentansprüche

1. Vorrichtung (1) zum Behandeln von Behältnissen und/oder Verpackungen mit einer ersten Behandlungseinrichtung (2), welche die Behältnisse und/oder Verpackungen in einer ersten vorgegebenen Weise behandelt, mit einer zweiten Behandlungseinrichtung (6), welche die Behältnisse und/oder Verpackungen in einer zweiten vorgegebenen Weise behandelt und mit einer Transporteinrichtung (8) zum Transportieren der Behältnisse und/oder Verpackungen und mit einer Überwachungseinrichtung zum Überwachen der Vorrichtung (1), und die Überwachungseinrichtung ein unbemanntes und ferngesteuertes Fluggerät (20) aufweist sowie eine Steuerungseinrichtung (40) zum drahtlosen Steuern dieses Fluggeräts (20), wobei das Fluggerät (20) bevorzugt eine Bildaufnahmeeinrichtung (24) aufweist,
wobei
die Vorrichtung (1) eine Begrenzungseinrichtung (30) aufweist, welche einen Flugbereich des Fluggeräts (20) begrenzt und welche eine Vielzahl von elektrischen Leitern aufweist, die in unterschiedlichen Höhenpositionen angeordnet sind, so dass das Fluggerät (20) den von dieser Begrenzungseinrichtung (30) umschlossenen Bereich nicht verlassen kann, und wobei die Vorrichtung (1) ein Ruheterminal (36) aufweist, welches von dem Fluggerät (20) in einer Ruheposition des Fluggeräts (20) anfliegbar ist und wobei die Vorrichtung (1) eine Störungserkennungseinrichtung (54) aufweist, welche dazu geeignet ist, Störungen der Behandlungseinrichtungen (2, 4) zu erfassen und die Steuerungseinrichtung das Fluggerät in Abhängigkeit von einer durch die Störungserkennungseinrichtung (54) erfassten Störung steuert und das Fluggerät (20) anweist, die Bereiche dieser Störungen anzufliegen.

2. Vorrichtung (1) nach Anspruch 1,
**dadurch gekennzeichnet, dass**
die Begrenzungseinrichtung (30) wenigstens eine erste Sendeeinrichtung (51, 52) aufweist, welche Signale an eine erste Empfangseinrichtung (24), welche an dem Fluggerät (20) angeordnet ist, ausgibt.

3. Vorrichtung (1) nach wenigstens einem der vorangegangenen Ansprüche,
**dadurch gekennzeichnet, dass**
das Fluggerät (20) eine Sendeeinrichtung (26) aufweist, um Signale und insbesondere Signale, welche für von der Bildaufnahmeeinrichtung (24) aufgenommene Bilder charakteristisch sind, auszugeben.

4. Vorrichtung (1) nach wenigstens einem der vorangegangenen Ansprüche,
**dadurch gekennzeichnet, dass**
die Vorrichtung (1) eine Bildausgabeeinrichtung (44) zur Ausgabe von der Bildaufnahmeeinrichtung (24) aufgenommener Bilder aufweist.

5. Vorrichtung (1) nach Anspruch 1,
**dadurch gekennzeichnet, dass**
das Ruheterminal (36) als Ladeeinrichtung zum elektrischen Laden des Fluggeräts (20) ausgebildet ist.

6. Vorrichtung (1) nach wenigstens einem der vorangegangenen Ansprüche,
**dadurch gekennzeichnet, dass**
die Vorrichtung (1) eine Kollisionsverhinderungseinrichtung aufweist, welche eine Kollision des Fluggeräts (20) mit beweglichen oder unbeweglichen Objekten verhindert.

7. Vorrichtung (1) nach wenigstens einem der vorangegangenen Ansprüche,
**dadurch gekennzeichnet, dass**
die Vorrichtung (1) einen Reinraum aufweist, innerhalb dessen die Behältnisse (10) behandelbar sind und das Fluggerät geeignet und bestimmt ist, innerhalb dieses Reinraums zu fliegen.

8. Vorrichtung (1) nach wenigstens einem der vorangegangenen Ansprüche,
**dadurch gekennzeichnet, dass**
das Fluggerät (20) eine Greifeinrichtung und/oder Halteeinrichtung zum Greifen und/oder Halten von Objekten aufweist.

9. Vorrichtung (1) nach Anspruch 8,
**dadurch gekennzeichnet, dass**
die Greifeinrichtung gegenüber dem Fluggerät (20) auswechselbar ist.

10. Verfahren zum Betreiben einer Vorrichtung (1) zum Behandeln von Behältnissen (10) und/oder Verpackungen, wobei die Behältnisse (10) und/oder Verpackungen mit einer ersten Behandlungseinrichtung (2) in einer ersten vorgegebenen Weise behandelt werden und von einer zweiten Behandlungseinrichtung (6) in einer zweiten vorgegebenen Weise behandelt werden und mit einer Transporteinrichtung (8) transportiert werden, wobei wenigstens zeitweise eine Überwachung der Vorrichtung (1) mittels einer Überwachungseinrichtung erfolgt, und im Rahmen der Überwachung mit der Überwachungseinrichtung ein unbemanntes und ferngesteuertes Fluggerät (20), welches eine Bildaufnahmeeinrichtung (24) aufweist, vorgegebene Bereiche der Vorrichtung (1) anfliegt und wenigstens ein Bild dieses vorgegebenen Bereichs aufnimmt,
wobei
die Vorrichtung (1) ein Ruheterminal (36) aufweist, welches von dem Fluggerät (20) in einer Ruheposition des Fluggeräts (20) anfliegbar ist und wobei mittels einer Störungserkennungseinrichtung (54) Störungen der Vorrichtung (1) erkannt werden und das Fluggerät in Abhängigkeit von solchen erkannten Störungen gesteuert wird und das Fluggerät (20) angewiesen wird, die Bereiche dieser Störungen anzufliegen und eine Begrenzungseinrichtung (30) vorgesehen ist, welche einen Flugbereich des Fluggeräts begrenzt und welche eine Vielzahl von elektrischen Leitern aufweist, die in unterschiedlichen Höhenpositionen angeordnet sind, so dass das Fluggerät (20) den von dieser Begrenzungseinrichtung (30) umschlossenen Bereich nicht verlassen kann.

11. Verfahren nach Anspruch 10,
**dadurch gekennzeichnet, dass**
das Fluggerät diese vorgegebenen Bereiche mittels vorbestimmter Flugbahnen anfliegt.

12. Verfahren nach Anspruch 10,
**dadurch gekennzeichnet, dass**
das Fluggerät wenigstens zeitweise mittels einer Halte- und/oder Greifeinrichtung Objekte transportiert.

## Claims

1. Apparatus (1) for treating containers and/or packages, with a first treatment device (2) which treats the containers and/or packages in a first predefined fashion, with a second treatment device (6) which treats the containers and/or packages in a second predefined fashion, and with a transport device (8) for transporting the containers and/or packages, and with a monitoring device for monitoring the apparatus (1),
wherein
the monitoring device comprises an unmanned remote-controlled flying machine (20) and a control device (40) for wireless control of this flying machine (20), wherein the flying machine (20) preferably has an imagerecording device (24), wherein the apparatus (1) has a limiting device (30) which limits a flying area of the flying machine (20) and which comprises a plurality of electrical conductors arranged at various height positions, so that the flying machine (20) cannot leave the region enclosed by this limiting device (30), and wherein the apparatus (1) has a rest terminal (36) to which the flying machine (20) can fly in a rest position of the flying machine (20), and wherein the apparatus (1) comprises a fault detection device (54) which is suitable for detecting faults in the treatment devices (2, 4) and the control device controls the flying machine as a function of a fault detected by the fault detection device (54) and instructs the flying machine (20) to fly to the areas of these faults.

2. Apparatus (1) according to claim 1,
**characterised in that**
the limiting device (30) comprises at least one first transmission device (51, 52) which emits signals to a first receiving device arranged on the flying machine (20).

3. Apparatus (1) according to at least one of the preceding claims,
**characterised in that**
the flying machine (20) has a transmission device (26) for emitting signals and in particular signals characteristic of the images recorded by the image recording device (24).

4. Apparatus (1) according to at least one of the preceding claims,
**characterised in that**
the apparatus (1) has an image output device (44) for displaying the images recorded by the image recording device (24).

5. Apparatus (1) according to claim 1,
**characterised in that**
the rest terminal (36) is configured as a charging device for electrically charging the flying machine (20).

6. Apparatus (1) according to at least one of the preceding claims,
**characterised in that**
the apparatus (1) comprises a collision avoidance device which prevents a collision of the flying machine (20) with movable or immovable objects.

7. Apparatus (1) according to at least one of the preceding claims,
**characterised in that**
the apparatus (1) comprises a clean room within which the containers (10) can be treated, and the flying machine is suitable and intended for flying inside the clean room.

8. Apparatus (1) according to at least one of the preceding claims,
**characterised in that**
the flying machine (20) has a gripper device and/or a holding device for gripping and holding objects.

9. Apparatus (1) according to claim 8,
**characterised in that**
the gripper device is interchangeable on the flying machine (20).

10. Method for operating an apparatus (1) for treating containers (10) and/or packages, wherein the containers (10) and/or packages are treated by a first treatment device (2) in a first predefined fashion and by a second treatment device (6) in a second predefined fashion, and transported with a transport device (8), wherein for at least part of the time the apparatus (1) is monitored by means of a monitoring device, wherein as part of monitoring by the monitoring device, an unmanned remote-controlled flying machine (20) comprising an image recording device (24) flies to predefined areas of the apparatus (1) and records at least one image of this predefined area,
wherein
the apparatus (1) has a rest terminal (36) to which the flying machine (20) can fly in a rest position of the flying machine (20), and wherein faults in the apparatus (1) are detected by means of a fault detection device (54), and the flying machine is controlled depending on such detected faults and the flying machine (20) is instructed to fly to the areas of these faults and a limiting device (30) which limits a flying area of the flying machine (20) and which comprises a plurality of electrical conductors arranged at various height positions, so that the flying machine (20) cannot leave the region enclosed by this limiting device (30).

11. Method according to claim 10,
**characterised in that**
the flying machine flies to this predefined area by means of predefined flight paths.

12. Method according to claim 10,
**characterised in that**
the flying machine for at least part of the time transports objects by means of a holding and/or gripper device.

## Revendications

1. Dispositif (1) de traitement de récipients et/ou d'emballages avec un premier système de traitement (2), lequel traite les récipients et/ou emballages d'une première manière prédéfinie, avec un deuxième système de traitement (6), lequel traite les récipients et/ou emballages d'une deuxième manière prédéfinie, et avec un système de transport (8) pour transporter les récipients et/ou emballages et avec un système de surveillance pour surveiller le dispositif (1), lequel système de surveillance présente un engin volant (20) sans équipage et télécommandé ainsi qu'un système de commande (40) pour commander sans fil ledit engin volant (20), dans lequel l'engin volant (20) présente de manière préférée un système de prise d'images (24),
dans lequel
le dispositif (1) présente un système de délimitation (30), lequel délimite une zone de survol de l'engin volant (20) et lequel présente une pluralité de conducteurs électriques, qui sont disposés à différentes positions en hauteur si bien que l'engin volant (20) ne peut pas quitter la zone renfermée par ledit système de délimitation (30), et dans lequel le dispositif (1) présente un terminal de repos (36), qui peut être survolé par l'engin volant (20) dans une position de repos de l'engin volant (20) et dans lequel le dispositif (1) présente un système d'identification d'interférences (54), lequel est adapté pour détecter des interférences des systèmes de traitement (2, 4) et le système de commande commande l'engin volant en fonction d'une interférence détectée par le système d'identification d'interférences (54) et donne pour instruction à l'engin volant (20) de survoler les zones desdites interférences.

2. Dispositif (1) selon la revendication 1,
**caractérisé en ce que**
le système de délimitation (30) présente au moins un premier système d'envoi (51, 52), lequel envoie des signaux à un premier système de réception (24), lequel est disposé sur l'engin volant (20).

3. Dispositif (1) selon au moins l'une quelconque des revendications précédentes,
**caractérisé en ce que**
l'engin volant (20) présente un système d'envoi (26) pour envoyer des signaux et en particulier des signaux, qui sont caractéristiques d'images prises par le système de prise d'images (24).

4. Dispositif (1) selon au moins l'une quelconque des revendications précédentes,
**caractérisé en ce que**
le dispositif (1) présente un système d'envoi d'images (44) pour envoyer des images prises par le système de prise d'images (24).

5. Dispositif (1) selon la revendication 1,
**caractérisé en ce que**
le terminal de repos (36) est réalisé en tant que système de charge pour charger électriquement l'engin volant (20).

6. Dispositif (1) selon au moins l'une quelconque des revendications précédentes,
**caractérisé en ce que**
le dispositif (1) présente un système anti-collision, lequel empêche une collision de l'engin volant (20) avec des objets mobiles ou immobiles.

7. Dispositif (1) selon au moins l'une quelconque des revendications précédentes,
**caractérisé en ce que**
le dispositif (1) présente une salle blanche, à l'intérieur de laquelle les récipients (10) peuvent être traités et l'engin volant est adapté pour et se destine à voler à l'intérieur de ladite salle blanche.

8. Dispositif (1) selon au moins l'une quelconque des revendications précédentes,
**caractérisé en ce que**
l'engin volant (20) présente un système de préhension et/ou un système de maintien pour saisir et/ou maintenir des objets.

9. Dispositif (1) selon la revendication 8,
**caractérisé en ce que**
le système de préhension peut être remplacé par rapport à l'engin volant (20).

10. Procédé pour faire fonctionner un dispositif (1) pour traiter des récipients (10) et/ou des emballages, dans lequel les récipients (10) et/ou emballages sont traités avec un premier système de traitement (2) d'une première manière prédéfinie et sont traités par un deuxième système de traitement (6) d'une deuxième manière prédéfinie et sont transportés avec un système de transport (8), dans lequel une surveillance du dispositif (1) est effectuée au moins par intermittence au moyen d'un système de surveillance, et un engin volant (20) sans équipage et télécommandé, lequel présente un système de prise d'images (24), survole des zones prédéfinies du dispositif (1) dans le cas de la surveillance avec le système de surveillance et prend au moins une image de ladite zone prédéfinie,
dans lequel
le dispositif (1) présente un terminal de repos (36), lequel peut être survolé par l'engin volant (20) dans une position de repos de l'engin volant (20) et dans lequel des interférences du dispositif (1) sont identifiées au moyen d'un système d'identification d'interférences (54) et l'engin volant est commandé en fonction d'interférences identifiées de ce type et l'engin volant (20) a pour instruction de survoler les zones desdites interférences et un système de délimitation (30) est prévu, lequel délimite une zone de survol de l'engin volant et lequel présente une pluralité de conducteurs électriques, qui sont disposés à différentes positions en hauteur de sorte que l'engin volant (20) ne peut pas quitter la zone renfermée par ledit système de délimitation (30).

11. Procédé selon la revendication 10,
**caractérisé en ce que**
l'engin volant survole lesdites zones prédéfinies au moyen de trajectoires de vol prédéterminées.

12. Procédé selon la revendication 10,
**caractérisé en ce que**
l'engin volant transporte au moins par intermittence des objets au moyen d'un système de maintien et/ou de préhension.
